# EUROPÄISCHE PATENTSCHRIFT

(11) **EP 2 233 332 B1**
(45) Veröffentlichungstag und Bekanntmachung des Hinweises auf die Patenterteilung: **06.03.2013**
(21) Anmeldenummer: 10002915.6
(22) Anmeldetag: 19.03.2010
(51) Int. Cl.: B60G 17/016

(54) **Verfahren zur Ansteuerung von den Wankwinkel eines Kraftfahrzeugs beeinflussenden Aktoren**
Method for controlling actuators which affect the roll angle of a motor vehicle
Procédé de commande d'actionneurs influençant l'angle de roulis d'un véhicule automobile

(30) Priorität: 25.03.2009 DE 102009014747
(43) Veröffentlichungstag der Anmeldung: 29.09.2010
(73) Patentinhaber: Audi AG, 85045 Ingolstadt (DE)
(72) Erfinder: Meitinger, Karl-Heinz, 81667 München (DE); Schmidt, Walter, 86643 Rennertshofen (DE); Ohletz, Armin, 85092 Kösching (DE)
(74) Vertreter: Patzelt, Heike Anna Maria

(56) Entgegenhaltungen:
- DE-A1- 10 060 536
- DE-A1-102005 033 995
- DE-A1-102007 006 034

## Beschreibung

Die Erfindung betrifft ein Verfahren zur Ansteuerung von den Wankwinkel eines Kraftfahrzeugs beeinflussenden Aktoren, insbesondere Aktoren eines aktiven Federungssystems oder eines Systems mit aktiven Stabilisatoren.

Es ist allgemein bekannt, dass mit sogenannten aktiven Federungssystemen, auch Active Body Control (ABC) genannt, neben der Federungs- und Dämpfungsfunktion auch ein Ausgleich der Nick- und Wankbewegungen durch eine dynamische Regelung der Vertikalposition eines jeden einzelnen Rades möglich ist, insbesondere das aktive Unterdrücken von Wankbewegungen des Fahrzeugs bei Kurvenfahrt, um bspw. die Fahrstabilität des Fahrzeugs zu erhöhen. Eine aktive Wankstabilisierung kann auch mit Systemen mit aktiven Stabilisatoren realisiert werden.

So ist aus der WO 2006007908 A1 ein Verfahren zur Erhöhung der Fahrstabilität eines Kraftfahrzeugs bekannt, bei dem eine modellgestützte Vorsteuerung benutzt wird, um zur Reduktion des Längsdynamikeinflusses auf die Quer- und Gierdynamik ein kompensierendes Giermoment auf das Fahrzeug aufzubringen und dadurch den Nachteil einer jeden Regelung zu vermeiden, wonach diese erst mit dem Auftreten einer Abweichung eingreift und infolgedessen die Wirkung erst nach einer gewissen Zeitspanne eintreten kann. Als Eingangsgrößen für dieses bekannte Vorsteuerverfahren werden die Größen effektiver Lenkwinkel, der sich aus einem Fahrerlenkwinkel ergeben kann, Fahrzeug-Referenzgeschwindigkeit und ein Wert für die Längsbeschleunigung verwendet, also Größen, die ausschließlich auf Fahrervorgaben beruhen. Auf der Basis solcher Größen soll mit der modellgestützten Vorsteuerung die Abhängigkeit des Eigenlenkverhaltens des Fahrzeugs von der Längsdynamik deutlich reduziert werden.

Des Weiteren beschreibt auch die DE 10 2006 033 631 A1 ein modellbasiertes Verfahren zur Stabilisierung eines Fahrzeugs unter Berücksichtigung der Fahrzeugquerdynamik, bei dem aus dem Fahrerwunsch oder aus einer autonomen Streckenführung eine die Querdynamik des Fahrzeugs beschreibende Sollgröße mittels einem Fahrzeugmodell ermittelt wird, aus der durch Vergleich mit einer gemessenen oder geschätzten Zustandsgröße eine Stellgröße abgeleitet wird, die mindestens einem Aktuator im Fahrzeug zugeführt wird. So stellt die abgeleitete Stellgröße gemäß der DE 10 2006 033 635 A1 einen Überlagerungswinkel dar, der einem Lenküberlagerungsgetriebe eines Fahrzeugs zugeführt wird.

Schließlich ist aus DE 10 2005 033 995 A1 ein Verfahren zur Ansteuerung eines Giermomentaktuators bekannt, bei dem bei einer Kurvenfahrt des Fahrzeugs der aktuelle Lenkwinkel und die Fahrgeschwindigkeit des Fahrzeugs erfasst, der aktuelle Reibwert zwischen den Reifen des Fahrzeugs und der Fahrbahn bestimmt sowie in Abhängigkeit daraus eine Soll-Kurve festgelegt wird, um das Giermoment des Giermomentaktuators derart einzustellen, dass die resultierende aktuelle Gesamtquerbeschleunigung des Fahrzeugs auf die festgelegte Sollkurve gesteuert wird. Die Soll-Kurve wird dabei so gewählt, dass sie sowohl den Grenzbereich der maximalen Fahrzeug-Querbeschleunigung auf den mit dem Giermomentaktuator erreichbaren Wert erweitert wird als auch ein harmonischer, reproduzierbarer Verlauf des Eigenlenkverhaltens des Fahrzeugs vorteilhaft erhalten bleibt.

Diese bekannten Verfahren zielen im Wesentlichen darauf ab, die Quer- oder Gierdynamik eines Fahrzeugs derart zu beeinflussen, damit das Auftreten etwaiger sicherheitskritischer Situationen vermieden oder zumindest abgeschwächt werden. Komfortrelevante Aspekte werden dabei nicht berücksichtigt.

Aufgabe der Erfindung ist es daher, ein Verfahren zur Beeinflussung des Wankwinkels eines mit einer automatischen oder teilautomatischen Fahrzeugführung ausgestatteten Fahrzeugs anzugeben, das ein komfortables und für die Insassen querbeschleunigungsfreies oder querbeschleunigungsreduziertes automatisches oder teilautomatisches Fahren ermöglicht.

Diese Aufgabe wird gelöst durch ein Verfahren mit den Merkmalen des Patentanspruchs 1.

Ein solches Verfahren weist zur Ansteuerung von die Wankbewegung eines Fahrzeugs beeinflussenden Aktoren, insbesondere Aktoren eines aktiven Federungssystems oder eines Systems mit aktiven Stabilisatoren, wobei das Fahrzeug mit einer Funktion für eine vorausschauende Längs- und Querführung mit einer Vorausschauzeitdauer (t_{V}) ausgestattet ist, folgende Verfahrensschritte auf:
a) Ermitteln von wenigstens einer die zukünftige Querbeschleunigung beeinflussende Größe aus der Funktion für eine vorausschauende Längs-und Querführung,
b) Berechnen des zukünftigen Verlaufs dieser Querbeschleunigung auf der Basis eines Fahrzeugmodells für die Vorausschauzeitdauer (t_{V}),
c) Berechnen der Querneigung des Fahrzeugs, die zur wenigstens teilweisen Kompensation des zukünftigen Verlaufs der auf die Insassen wirkenden Querbeschleunigung für die Vorausschauzeitdauer (t_{V}) erforderlich ist, und
d) Steuerung der Aktoren derart, dass das Fahrzeug eine der berechneten Querneigung entsprechende Wankbewegung zeitlich zumindest annähernd phasengleich mit dem zukünftigen Verlauf der Querbeschleunigung während der Vorausschauzeitdauer (tv) ausführt.

Mit diesem erfindungsgemäßen Verfahren wird ein aktives "in die Kurve neigen" bei teilautomatischer oder automatischer Fahrt möglich, ohne zu Komforteinbußen zu führen. Denn durch die Vorsteuerung, die die automatische Fahrzeugführung zulässt, kann das zukünftige Wanken und die zukünftige Querbeschleunigung berechnet werden und dementsprechend die Aktoren des Federungssystems oder der Stabilisatoren eines entsprechenden Systems so angesteuert werden, dass nahezu kein Phasenverzug zwischen dem Aufbau der Querbeschleunigung und dem Ausgleich durch das aktive Wanken entsteht und hierdurch der Fahrer oder die Fahrzeuginsassen keinen unrunden und damit auch keinen unangenehmen Querbeschleunigungsdruck wahrnehmen.

Vorzugsweise wird im Verfahrensschritt a) der Lenkwinkel und die Fahrzeuggeschwindigkeit als die die zukünftige Querbeschleunigung beeinflussenden Größen aus der Funktion für eine vorausschauende Längs-und Querführung ermittelt. Auch können zusätzlich der Kurvenverlauf und/oder der Verlauf der Fahrspur als solche Größe bzw. Größen ermittelt werden. Schließlich sind auch die Fahrzeuggeschwindigkeit und der Kurvenverlauf oder der Verlauf der Fahrspur geeignet, als die die zukünftige Querbeschleunigung beeinflussenden Größen zu ermitteln.

Gemäß einer Weiterbildung der Erfindung wird zur Durchführung des Verfahrensschrittes d) eine Stellgröße auf der Basis eines Fahrzeug-Aktormodells berechnet. Insbesondere wird die Verzögerung bei der Einstellung der Aktoren mit der berechneten Stellgröße auf der Basis eines Aktormodells berechnet, um den richtigen Zeitpunkt zur Ansteuerung der Aktoren zu erhalten und damit einen Phasenverzug zwischen dem Aufbau der Querbeschleunigung und dem aktiven Wanken im Wesentlichen zu vermeiden.

Mit einer besonderen Weiterbildung der Erfindung, bei der zusätzlich die Fahrbahnneigung und/oder deren zukünftiger Verlauf ermittelt wird, wird eine weitere Verbesserung des Verfahrens erreicht. Hierzu wird die aktuelle Fahrzeugneigung mittels Neigungssensoren sensiert und bei der Berechnung des Stellwertes berücksichtigt. Zusätzlich kann auch bei vorhandenen Straßenverlaufsdaten, die durch ein Navigationssystem oder alternativ über bordeigene Sensoren, wie bspw. Laserscanner bereitgestellt werden, der zukünftige Verlauf der Fahrbahnneigung berücksichtigt werden.

Teilautomatische oder automatische Fahrzeugführungen sind als Funktion für eine vorausschauende Längs- und Querführung bekannt, so zum Beispiel automatische Spurhaltesysteme oder Spurwechselsysteme als auch Staufolgeregelungen. Es sind Systeme, die eine Querregelung und eine Längsregelung aufweisen.

Gemäß einer besonderen Weiterbildung der Erfindung wird aufgrund vorgegebener Kriterien der Grad der Kompensation des zukünftigen Verlaufs der Querbeschleunigung bestimmt, vorzugsweise betrifft dies komforttechnische oder fahrsicherheitstechnische Gründe. So kann eine Kompensation auch nur teilweise durchgeführt werden, insbesondere könnte wegen der genannten Gründe auch vollständig auf eine Kompensation des zukünftigen Verlaufs der Querbeschleunigung verzichtet werden. Vorzugsweise können auch andere Funktionen des Federungssystems in bestimmten Fahrsituation gegenüber der erfindungsgemäßen Kompensation der Querbeschleunigung priorisiert werden.

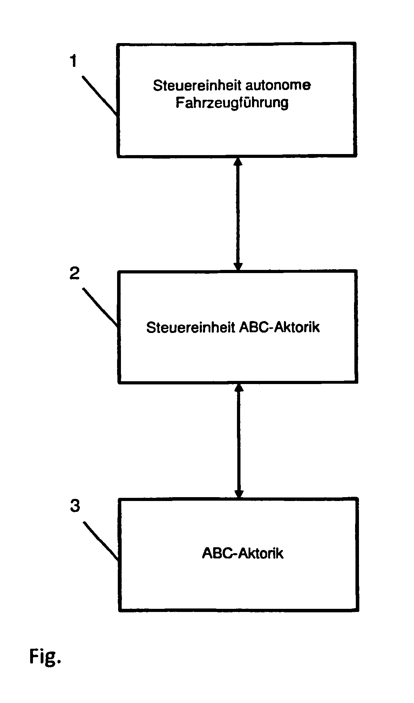

Die Erfindung wird nachfolgend anhand eines Ausführungsbeispiels unter Bezugnahme auf die beigefügte Figur ausführlich beschrieben.

Die einzige Figur zeigt ein Blockschaltbild der für die Durchführung des erfindungsgemäßen Verfahrens erforderlichen Funktionseinheiten.

Das System zur Umsetzung des erfindungsgemäßen Verfahrens besteht im Wesentlichen aus zwei Steuereinheiten 1 und 2 und einer Aktorik 3 eines aktiven Fahrwerksystems, im Folgenden ABC (Active Body Control) genannt. Die Steuereinheit 1 regelt eine teilautomatische oder automatische Fahrzeugführung, während die Steuereinheit 2 für die Steuerung der ABC-Aktorik 3 verantwortlich ist. Alternativ könnte die Aktorik 3 auch ein Wankstabilisierungssystem mit aktiven Stabilisatoren darstellen.

Unter die Kategorie teilautomatische Fahrzeugführungssysteme fallen bspw. Abstandsregelsysteme, Spurhalte- und Spurwechselsysteme, die ein Längs-oder eine Querregelungssystem aufweisen. Automatische Fahrzeugführungssysteme sind Systeme, die sowohl ein Längs- als auch ein Querregelungssystem aufweisen.

Die Steuereinheit 1 für eine solche teilautomatische oder automatische Fahrzeugführung mit einer Quer- und Längsregelung errechnet den zukünftigen Verlauf des Längs- und Querverhaltens des Fahrzeugs für eine Vorausschauzeitdauer t_{V}, wobei für die in der Zukunft liegende Zeitdauer t_{V} der Verlauf des Lenkwinkels aufgrund der Querregelung des Fahrzeugs und der Verlauf der Fahrzeuggeschwindigkeit aufgrund der Längsregelung des Fahrzeugs bestimmt werden.

Zusätzlich wird auch die Fahrbahnneigung quer zur Fahrtrichtung sensiert, idealerweise natürlich auch der weitere Verlauf dieser Fahrbahnneigung bis zum Ende der Vorausschauzeitdauer t_{V}. Dieser weitere Verlauf der Fahrbahnneigung kann bspw. aus den Straßenverlaufsdaten eines Navigationssystems bereitgestellt werden.

Dieser zukünftige Lenkwinkelverlauf und der zukünftige Geschwindigkeitsverlauf als auch der zukünftige Verlauf der seitlichen Fahrbahnneigung werden von der Steuereinheit 1 an die Steuereinheit 2 weitergeleitet. Dort werden mittels eines geeigneten Fahrzeugmodells ein zukünftiger Verlauf der auf die Insassen wirkenden Querbeschleunigung bis zum Ende der Vorausschauzeitdauer t_{V} berechnet.

Anschließend wird aus diesem zukünftigen Verlauf der Querbeschleunigung die notwendige Querneigung des Fahrzeugs berechnet, um diese Querbeschleunigung vollständig oder teilweise auszugleichen. Aus dieser berechneten Querneigung wird mittels eines Fahrzeug- und Feder-Dämpfermodells die Stellgröße für die Verstellung des ABC-Aktoren 3 berechnet (oder alternativ die Verstellung der Aktoren von aktiven Stabilisatoren), die erforderlich ist, um die zukünftig notwendige Querneigung des Fahrzeugs unter der sich zukünftig aufbauenden Querbeschleunigung einzustellen. Um eine Phasengleichheit zwischen dem Aufbau der zukünftig eintretenden Querbeschleunigung und dem aktiven Wanken sicherzustellen, wird anhand eines Aktorikmodells der ABC-Aktoren 3 die Verzögerung berechnet, die bei der berechneten Stellgröße bis zum Eintreten der Wirkung auftritt. Die ABC-Aktoren 3 werden entsprechend der berechneten Verzögerung von der Steuereinheit 2 entsprechend angesteuert, um somit die rechtzeitige Einstellung der Querneigung des Fahrzeugs sicherzustellen.

Es gibt Fahrsituationen, in denen es nicht sinnvoll ist, aus Gründen des Fahrkomforts oder der Fahrsicherheit die zukünftig sich einstellende Querbeschleunigung vollständig, auch nicht teilweise zu kompensieren.

Dies betrifft vor allem sicherheitskritische Fahrsituationen mit einem schnellen Richtungswechsel, wo es sinnvoll ist, die heftig auftretenden Querbeschleunigungen nicht zu kompensieren um dem Fahrer die sicherheitskritische Situation auch haptisch empfinden zu lassen.

In bestimmten Fahrsituationen können andere Funktionen des ABC-Systems oder der Wankstabilisierung, die parallel zur Reduzierung der Querbeschleunigung betrieben werden dazu führen, dass für eine vollständige Erfüllung beider Funktionen ein Verstellweg benötigt wird, der von mindestens einem Aktor nicht geliefert werden kann. In diesem Fall kann eine andere Funktion gegenüber der Reduzierung der Querbeschleunigung priorisiert werden, so dass keine oder eine geringere Reduzierung der Querbeschleunigung erfolgt.

Auch können Fahrsituationen entstehen, in welchen bspw. wegen Unebenheiten der Fahrbahnoberfläche durch die ABC-Steuerung der Fahrzeugaufbau beruhigt wird, jedoch der Verstellbereich der Aktoren nicht für eine vollständige erfindungsgemäße Kompensation der Querbeschleunigung ausreicht. In solchen Fahrsituationen erfolgt nur eine teilweise Kompensation oder es wird sogar vollständig auf eine Kompensation verzichtet.

Auch können bestimmte Funktionen eines ABC-Systems gegenüber der erfindungsgemäßen Kompensation einer Querbeschleunigung priorisiert werden. Eine solche Funktion könnte eine radindividuelle Einstellung der Radlast zur Erhöhung der Bremswirkung sein.

Das erfindungsgemäße Verfahren bietet sich daher hauptsächlich zur Komforterhöhung in nicht sicherheitskritischen Fällen an, so zum Beispiel das Durchfahren von Kurven bei höherer Geschwindigkeit, bspw. auf der Autobahn.

## Patentansprüche

1. Verfahren zur Ansteuerung von die Wankbewegung eines Fahrzeugs beeinflussenden Aktoren, insbesondere Aktoren eines aktiven Federungssystems oder eines Systems mit aktiven Stabilisatoren, wobei das Fahrzeug mit einer Funktion für eine vorausschauende Längs- und Querführung mit einer Vorausschauzeitdauer (t_{V}) ausgestattet ist, welches folgende Verfahrensschritte aufweist:
a) Ermitteln von wenigstens einer die zukünftige Querbeschleunigung beeinflussende Größe aus der Funktion für eine vorausschauende Längs- und Querführung,
b) Berechnen des zukünftigen Verlaufs dieser Querbeschleunigung auf der Basis eines Fahrzeugmodells für die Vorausschauzeitdauer (t_{V}),
c) Berechnen der Querneigung des Fahrzeugs, die zur wenigstens teilweisen Kompensation des zukünftigen Verlaufs der auf die Insassen wirkenden Querbeschleunigung für die Vorausschauzeitdauer (t_{V}) erforderlich ist, und
d) Steuerung der Aktoren derart, dass das Fahrzeug eine der berechneten Querneigung entsprechende Wankbewegung zeitlich zumindest annähernd phasengleich mit dem zukünftigen Verlauf der Querbeschleunigung während der Vorausschauzeitdauer (t_{V}) ausführt.

2. Verfahren nach Anspruch 1, **dadurch gekennzeichnet, dass** im Verfahrensschritt a) der Lenkwinkel und die Fahrzeuggeschwindigkeit als die die zukünftige Querbeschleunigung beeinflussenden Größen aus der Funktion für eine vorausschauende Längs- und Querführung ermittelt wird.

3. Verfahren nach Anspruch 2, **dadurch gekennzeichnet, dass** zusätzlich der Kurvenradius und/oder die Fahrspur als die die zukünftige Querbeschleunigung beeinflussenden Größen aus der Funktion für eine vorausschauende Längs- und Querführung ermittelt wird.

4. Verfahren nach Anspruch 1, **dadurch gekennzeichnet, dass** im Verfahrensschritt a) die Fahrzeuggeschwindigkeit und der Kurvenradius und/oder die Fahrspur als die die zukünftige Querbeschleunigung beeinflussenden Größen aus der Funktion für eine vorausschauende Längs- und Querführung ermittelt wird.

5. Verfahren nach einem der vorangehenden Ansprüche, **dadurch gekennzeichnet, dass** zur Durchführung des Verfahrensschrittes d) eine Stellgröße auf der Basis eines Fahrzeug-Aktormodells berechnet wird.

6. Verfahren nach Anspruch 5, **dadurch gekennzeichnet, dass** zur Durchführung des Verfahrensschrittes d) der Zeitpunkt zur Ansteuerung der Aktoren mit der berechneten Stellgröße auf der Basis eines Aktormodells berechnet wird.

7. Verfahren nach einem der Ansprüche 2 bis 6, **dadurch gekennzeichnet, dass** zusätzlich die Fahrbahnneigung und/oder deren zukünftiger Verlauf ermittelt wird.

8. Verfahren nach einem der vorhergehenden Ansprüche, **dadurch gekennzeichnet, dass** die Funktion für eine vorausschauende Längs- und Querführung eine teilautomatische oder automatische Fahrzeugführung darstellt.

9. Verfahren nach einem der vorhergehenden Ansprüche, **dadurch gekennzeichnet, dass** bei vorgegebenen Fahrsituationen keine Kompensation des zukünftigen Verlaufs der Querbeschleunigung durchgeführt wird.

10. Verfahren nach einem der vorhergehenden Ansprüche, **dadurch gekennzeichnet, dass** die Kompensation des zukünftigen Verlaufs der Querbeschleunigung nur teilweise durchgeführt wird.

11. Verfahren nach einem der vorhergehenden Ansprüche, **dadurch gekennzeichnet, dass** andere Funktionen eines aktiven Federungssystems des Fahrzeugs gegenüber der Durchführung der Kompensation des zukünftigen Verlaufs der Querbeschleunigung priorisiert sind.

## Claims

1. Method for activating actuators which affect the rolling movement of a vehicle, in particular actuators of an active suspension system or of a system comprising active stabilisers, the vehicle being provided with a function for anticipatory longitudinal and lateral guidance having an anticipated duration (t_{V}), comprising the following steps:
a) determining at least one variable affecting the future lateral acceleration from the function for anticipatory longitudinal and lateral guidance,
b) calculating the future course of this lateral acceleration on the basis of a vehicle model for the anticipated duration (t_{V}),
c) calculating the lateral inclination of the vehicle required to compensate, at least in part, the future course of the lateral acceleration acting on the passengers for the anticipated duration (t_{V}), and
d) controlling the actuators in such a way that the vehicle performs a rolling movement corresponding to the calculated lateral inclination at least approximately in phase with the future course of the lateral acceleration over time during the anticipated duration (t_{V}).

2. Method according to claim 1, **characterised in that** in method step a) the steering angle and the vehicle speed is determined as the variables affecting the future lateral acceleration from the function for anticipatory longitudinal and lateral guidance.

3. Method according to claim 2, **characterised in that** in addition the turning radius and/or the lane is determined as the variables affecting the future lateral acceleration from the function for anticipatory longitudinal and lateral guidance.

4. Method according to claim 1, **characterised in that** in method step a) the vehicle speed and the turning radius and/or the lane is determined as the variables affecting the future lateral acceleration from the function for anticipatory longitudinal and lateral guidance.

5. Method according to any of the preceding claims, **characterised in that** to carry out method step d) a manipulated variable is calculated on the basis of a vehicle actuator model.

6. Method according to claim 5, **characterised in that** to carry out method step d) the point in time for activating the actuators with the calculated manipulated variable is calculated on the basis of an actuator model.

7. Method according to any of claims 2 to 6, **characterised in that** in addition the roadway inclination and/or the future course thereof is determined.

8. Method according to any of the preceding claims, **characterised in that** the function for anticipatory longitudinal and lateral guidance represents semiautomatic or automatic vehicle guidance.

9. Method according to any of the preceding claims, **characterised in that** the future course of the lateral acceleration is not compensated in predetermined driving situations.

10. Method according to any of the preceding claims, **characterised in that** the future course of the lateral acceleration is compensated only in part.

11. Method according to any of the preceding claims, **characterised in that** other functions of an active suspension system of the vehicle are prioritised over compensating the future course of the lateral acceleration.

## Revendications

1. Procédé de commande d' actionneurs influençant le mouvement de roulis d'un véhicule, notamment d'actionneurs d'un système de suspension actif ou d'un système comportant des stabilisateurs actifs, le véhicule étant équipé d'une fonction destinée à un guidage longitudinal et transversal prévisionnel avec une durée prévisionnelle (t_{V}), lequel procédé comporte les étapes suivantes :
a) détermination d'au moins une grandeur influençant l'accélération transversale future à partir de la fonction destinée à un guidage longitudinal et transversal prévisionnel,
b) calcul de l'allure future de cette accélération transversale sur la base d'un modèle de véhicule pour la durée prévisionnelle (t_{V}),
c) calcul de l'inclinaison transversale du véhicule qui est nécessaire à la compensation au moins partielle de l'allure future de l'accélération transversale agissant sur les occupants pour la durée prévisionnelle (t_{V}), et
d) commande des actionneurs, de telle sorte que le véhicule exécute un mouvement de roulis correspondant à l'inclinaison transversale calculée, et ce au moins approximativement en phase avec l'allure future de l'accélération transversale pendant la durée prévisionnelle (t_{V}).

2. Procédé selon la revendication 1, **caractérisé en ce que**, dans l'étape de procédé a), on détermine l'angle de braquage et la vitesse de véhicule comme grandeurs influençant l'accélération transversale future à partir de la fonction destinée à un guidage longitudinal et transversal prévisionnel.

3. Procédé selon la revendication 2, **caractérisé en ce que**, en plus, on détermine le rayon de courbure et/ou la trajectoire comme grandeurs influençant l'accélération transversale future à partir de la fonction destinée à un guidage longitudinal et transversal prévisionnel.

4. Procédé selon la revendication 1, **caractérisé en ce que**, dans l'étape de procédé a), on détermine la vitesse de véhicule et le rayon de courbure et/ou la trajectoire comme grandeurs influençant l'accélération transversale future à partir de la fonction destinée à un guidage longitudinal et transversal prévisionnel.

5. Procédé selon l'une des revendications précédentes, **caractérisé en ce que**, pour la mise en oeuvre de l'étape de procédé d), on calcule une grandeur réglante sur la base d'un modèle d'actionneur de véhicule.

6. Procédé selon la revendication 5, **caractérisé en ce que**, pour la mise en oeuvre de l'étape de procédé d), on calcule l'instant pour la commande des actionneurs avec la grandeur réglante calculée sur la base d'un modèle d'actionneur.

7. Procédé selon l'une des revendications 2 à 6, **caractérisé en ce que**, en plus, on détermine l'inclinaison de chaussée et/ou l'allure future de celle-ci.

8. Procédé selon l'une des revendications précédentes, **caractérisé en ce que** la fonction destinée à un guidage longitudinal et transversal prévisionnel représente un guidage automatique ou partiellement automatique du véhicule.

9. Procédé selon l'une des revendications précédentes, **caractérisé en ce que**, dans des situations de conduite prédéterminées, il n'est effectué aucune compensation de l'allure future de l'accélération transversale.

10. Procédé selon l'une des revendications précédentes, **caractérisé en ce que** l'on effectue seulement partiellement la compensation de l'allure future de l'accélération transversale.

11. Procédé selon l'une des revendications précédentes, **caractérisé en ce que** d'autres fonctions d'un système de suspension actif du véhicule sont prioritaires par rapport à la mise en oeuvre de la compensation de l'allure future de l'accélération transversale.
